# EUROPEAN PATENT APPLICATION

(11) **EP 3 919 821 A1**
(43) Date of publication of application: **08.12.2021**
(21) Application number: 20178238.0
(22) Date of filing: 04.06.2020
(51) Int. Cl.: F24D 3/10, F24D 3/12, F24D 19/10

(54) **UNDERFLOOR HEATING**

(71) Applicant: Pittway Sarl, 1180 Rolle (CH)
(72) Inventor: Hurst, Andrew, Carnwath, ML11 8LU (GB)
(74) Representative: Murgitroyd & Company

(57) **Abstract**

An underfloor heating system (200) comprises a plurality of valves (204) configured to control the flow of a heating fluid through a plurality of heating loops (124) associated with one or more heating zones (122); and an electrical bus (202) connected to the valves (204) for providing power and data signals to the valves (204), wherein each valve (204) is configured to apply a respective valve set point in dependence on the data signals received over the electrical bus (202).

## Description

### Technical Field

The present disclosure relates to an underfloor heating system.

### Background

Conventional underfloor heating systems employ a dedicated underfloor heating controller which controls a number of thermal actuators. Each thermal actuator is typically associated with a respective underfloor heating loop and controls the flow of hot water through the heating loop. An underfloor heating installation typically spans several heating zones, which may correspond to different rooms and/or different regions of a larger room. Each zone may be heated by one or more separate underfloor heating loops, depending on requirements. Therefore, conventional installations will usually include a number of thermal actuators, and larger installations may require five or more thermal actuators.

The thermal actuators are opened and closed by applying a control voltage from the underfloor heating controller. The control voltage used is typically mains voltage in the region of 230 volts. The thermal actuators are all wired separately back to the underfloor heating controller in parallel, which results in a large amount of cabling in the vicinity of the underfloor heating controller. Owing to the high voltage typically required to operate the thermal actuators, the wiring must usually be installed by a qualified electrician and great care must be taken to ensure the high voltage is adequately isolated at the underfloor heating controller. The wiring itself must usually be double insulated to meet regulations. Thermal actuators are also slow and imprecise in operation, limiting the ability to precisely control the flow through the different heating loops, and they also consume a significant amount of power during operation. In addition, the correspondence between the heating zones and the thermal actuators is made through a mapping in the underfloor heating controller. However, this is often non-intuitive and can lead to installation errors with consequent improper functioning of the underfloor heating system.

The present disclosure seeks to mitigate at least one of the above-mentioned problems.

### Summary

According to a first aspect of the present disclosure, there is provided an underfloor heating system comprising:
a plurality of valves configured to control the flow of a heating fluid through a plurality of heating loops associated with one or more heating zones; and
an electrical bus connected to the valves for providing power and data signals to the valves,
wherein each valve is configured to apply a respective valve set point in dependence on the data signals received over the electrical bus.

Advantageously, the valves are responsive to data signals received over an electrical bus which allows for the elimination of a dedicated underfloor heating controller. The valves can locally process data signals received over the electrical bus and configure their valve set points in dependence thereon. In this manner, the valves may be considered to be intelligent devices, unlike the thermal actuators conventionally employed in underfloor heating systems which require a dedicated underfloor heating controller to operate them. Furthermore, the use of an electrical bus to which the valves are connected allows for a reduction in the amount of wiring in and around the valves, especially since the electrical bus serves dual functions of both powering the valves and supplying data signals to the valves to control their set points. This may facilitate installation of the underfloor heating system and reduces the amount of space required to manage electrical cabling compared to conventional underfloor heating systems. Further advantageously, underfloor heating systems according to the present disclosure may be more extendable than conventional systems, since the maximum number of valves is not limited by the fixed capability of a dedicated underfloor heating controller, which typically has capacity for in the region of five heating zones. Additional valves can be wired onto the electrical bus as dictated by the installation requirements. Theoretically, therefore, the number of valves which can form part of the underfloor heating system is virtually unlimited. Elimination of a dedicated underfloor heating controller may also reduce installation cost.

In embodiments, the underfloor heating system further comprises one or more temperature units, each associated with a respective one of the one or more heating zones. The temperature units may be, or comprise, temperature sensors.

In embodiments, each temperature sensor or unit is configured to receive a user input corresponding to a target temperature for the respective heating zone.

In embodiments in which the temperature units are, or comprise, temperature sensors, each temperature sensor is configured to sense temperature within the respective heating zone to provide a measured temperature.

In embodiments, each temperature sensor or unit is configured to transmit a data signal of a first type comprising the target temperature and the measured temperature.

In embodiments, the data signals received over the electrical bus comprise the data signals of the first type.

In embodiments, each valve is further configured such that in response to receiving a data signal of the first type corresponding to the heating zone comprising the heating loop controlled by that valve, the valve calculates and applies the valve set point in dependence on the target temperature and the measured temperature comprised in the data signal of the first type. In this manner, the valves perform the set point calculation locally based on temperature data received from temperature sensors installed in the heating zones. This allows for a decentralized system, since a dedicated controller is not required.

In embodiments, the data signals of the first type are transmitted directly from the one or more temperature sensors to the valves over the electrical bus. In this manner, there may be no intervening processing of the temperature data between the temperature sensors and the valves, further highlighting modularity of underfloor heating systems according to embodiments.

In embodiments, the underfloor heating system further comprises a controller. The controller may be separate from the valves. A controller may provide additional functionality, such as facilitating management of a heating timing program by a user. However, it should be appreciated that due to the capability of the valves to process data signals locally, such a controller is not essential.

In embodiments, the controller is configured such that in response to receiving a data signal of the first type, the controller calculates the valve set point for at least one of the valves in dependence on the target temperature and the measured temperature comprised in the data signal of the first type. In this manner, when a controller is present it may optionally perform the valve set point calculation for some or all of the valves, some or all of the time.

In embodiments, the controller transmits a data signal of a second type comprising the valve set point. Data signals of the second type are distinguished from data signals of the first type in that they comprise the valve set point calculated by the controller, as opposed to the raw target and measured temperature data transmitted by the temperature sensors.

In embodiments, the data signals received over the electrical bus comprise the data signals of the second type. It should be appreciated that at any time data signals of both the first and second types may be present on the electrical bus and both modes of operation can occur concurrently.

In embodiments, each valve is configured such that in response to receiving a data signal of the second type corresponding to the heating zone comprising the heating loop controlled by that valve, the valve applies the valve set point comprised in the data signal of the second type. In this manner, the valves need not perform the set point calculation locally based on temperature data received from temperature sensors installed in the heating zones. The valves instead may read the pre-calculated set point received in the data signal of the second type and apply it accordingly.

In embodiments, the underfloor heating system further comprises a wireless module connected to the electrical bus. In embodiments the wireless module is configured to receive wireless data signals of the first and/or second types from the controller and/or from the temperature sensors and to relay them to the valves over the electrical bus. In this manner, some or all of the temperature sensors and/or the controller need not be wired onto the electrical bus, which may facilitate installation and extension of the underfloor hating system, since wiring into different heating zones need not be provided.

In embodiments, the data signals received over the electrical bus comprise an identifier corresponding to one of the one or more heating zones. In embodiments, each valve is configured to be responsive only to data signals received over the electrical bus having an identifier corresponding to the heating zone comprising the heating loop controlled by that valve. In this manner, each valve effectively listens to all the data traffic being sent over the electrical bus, but only responds (i.e. configures its valve set point) if the data is relevant to the heating zone containing the heating loop controlled by the valve. Advantageously, the mapping between heating zones and the valves is effectively defined through the identifier which can be easily configured during installation of the underfloor heating system. This is in contrast to conventional dedicated underfloor heating controllers which rely on an opaque, fixed hardware mapping between heating zones and thermal actuators, often resulting in installation errors.

In embodiments, the valves are modulating, motorized valves. For example, the one or more of the valves may be based on an electronic thermostatic radiator valve (eTRV). In contrast to the thermal actuators used in conventional underfloor heating systems, modulating motorized valves enable improved control of the underfloor heating loops, allowing balancing and modulation control of heating water flow. Furthermore, modulating motorized valves have a low power consumption in use and consume no power at steady state, in contrast to thermal actuators. This reduces energy usage.

In embodiments, the valves are wired in series on the electrical bus. Wiring in series is one of several possible topologies for the electrical bus. However, advantageously, wiring in series or daisy chaining the valves on the electrical bus facilitates ease of installation since and reduces cabling since, for example, the installer can make bell wire connections between successive valves.

In embodiments, the underfloor heating system further comprises a power supply operable to provide power to the valves over the electrical bus. In embodiments, one end of the electrical bus is terminated at the power supply.

In embodiments, the voltage of the electrical bus is less than or equal to 24 volts, preferably less than or equal to 12 volts. In embodiments, the voltage is provided by the power supply. In embodiments, the voltage is a DC voltage. Advantageously, using a low voltage provides for safer installation of the underfloor heating system and can be carried out without the input of a qualified electrician.

In embodiments, the underfloor heating system further comprises a manifold connected to the plurality of heating loops. In embodiments, some or all of the plurality of valves are grouped together at the manifold.

It should be appreciated that features described in relation to one aspect of the present disclosure may be incorporated into other aspects of the present disclosure. For example, a method aspect may incorporate any of the features described with reference to an apparatus aspect and *vice versa.*

### Description of the Drawings

Embodiments of the present disclosure will now be described by way of example only with reference to the accompanying schematic drawings of which:
Figures 1 illustrates schematically a conventional underfloor heating system;
Figure 2 illustrates schematically hydraulic connections of an underfloor heating system;
Figure 3 illustrates schematically an underfloor heating system according to an embodiment of the present disclosure; and
Figure 4 illustrates schematically an underfloor heating system according to an embodiment of the present disclosure.

### Detailed Description

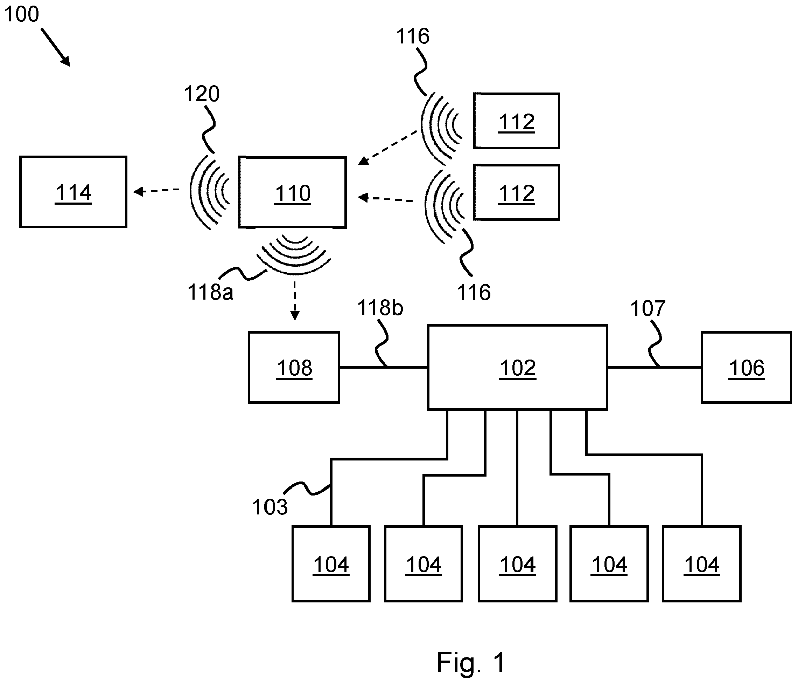

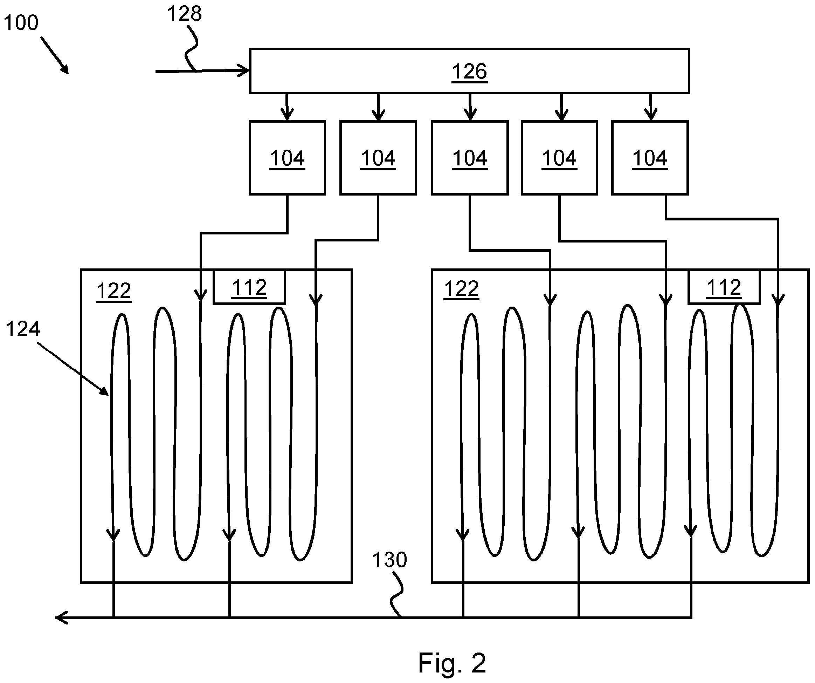

To assist in understanding the context of embodiments of the present disclosure, an exemplary conventional hydronic underfloor heating system 100 is first described with reference to Figure 1, which illustrates the electrical connections for providing power and signalling to and between different components of the system 100. Figure 2 illustrates the hydraulic connections between different components of the underfloor heating system 100. It should be appreciated that embodiments of the present disclosure may adopt the same or similar hydraulic layouts as described with reference to Figure 2.

In the conventional underfloor heating system 100 of Figure 1, a dedicated underfloor heating controller 102 controls, in this example, five separate thermal actuators 104. Each thermal actuator 104 is associated with a respective underfloor heating loop 124 and controls the flow of hot water 128 from a manifold 126 through the respective heating loop 124 and onwards to an outlet 130. In the illustrated example, the underfloor heating system 100 spans two heating zones 122 (see Figure 2), which may be two separate rooms, one of which is heated by two underfloor heating loops 124 and the other of which is heated by three underfloor heating loops 124. Each heating zone 122 contains a temperature sensor 112 which measures the actual, current temperature in the heating zone and allows a user to enter a desired set point (target) temperature. In the system of Figure 1, the temperature sensors 112 communicate with a central controller 110 via wireless signals 116. In operation, the temperature sensors 112 send measured and set point temperatures for their respective heating zones 122 to the central controller 110, either automatically or on the request of the central controller 100. The central controller 110 generally provides additional parameters, such as heating timing programs, economy modes etc., and usually assesses heating demand based on the measured and set point temperature data received from the temperature sensors 112. In response to determining that heating is required in one or more heating zones 122, the central controller 110 typically commands a boiler 114 via a wired or wireless connection 120, in addition to commanding the underfloor heating controller 102. The central controller 110 may send a wireless signal 118a (for example at a frequency of 868 MHz) to a wireless module 108 which relays the signal onwards to the underfloor heating controller 102 via a wired connection 118b. In some systems, the wireless module 108 is integrated within the underfloor heating controller 102. In response to signals received from the central controller 110, the underfloor heating controller 102 opens and closes the thermal actuators 104 by applying a high voltage to them, which is usually derived directly from a mains power supply 106 connected directly to the underfloor heating controller 102 via mains cabling 107. The voltage used in such conventional systems 100 is therefore in the region of 230 volts AC in Europe. The thermal actuators 104 are all wired separately back to the underfloor heating controller 102, in parallel, typically via double insulated main cabling 103. The underfloor heating controller 102 typically comprises a control algorithm, often based on so-called fuzzy logic, which aims to keep the temperature of a given heating zone 122 as close as possible to the set point temperature for that heating zone 122. In its standard form, the conventional underfloor heating controller 102 may provide up to 5 underfloor heating zones 122 with a maximum of three 230 volt thermal actuators 104 per zone 122. The underfloor heating controller 102 and thermal actuators 104 are usually all located in the vicinity of the manifold 126, whereas the central controller 110 is usually located so as to be easily accessible in use, such as in a hallway, for example. It should be appreciated that the conventional underfloor heating system 100 generally comprises additional components not illustrated, such as pumps and the like.

The inventor has recognised that there are numerous drawbacks associated with conventional underfloor heating systems 100, such as those described with reference to Figure 1. The thermal actuators 104 are all wired separately back to the underfloor heating controller 102 in parallel, which results in a large amount of cabling in the vicinity of the underfloor heating controller 102. Owing to the high voltage required in the conventional system 100 in order to operate the thermal actuators 104, the wiring 103 and 107 must usually be installed by a qualified electrician and great care must be taken to ensure the high voltage is adequately isolated at the underfloor heating controller 102. The wiring 103 and 107 must usually be double insulated to meet regulations, which makes it relatively expensive. The thermal actuators 104 are also slow and imprecise in operation, limiting the ability to precisely control the flow of heating fluid 128 through the different heating loops 124, and consequently placing limitations on the ability of the underfloor heating controller 102 to maintain the set point temperature of a particular heating zone 122 without overshooting and/or exceeding limitations governed by the maximum permissible floor temperature and the like. Furthermore, thermal actuators 104 consume a significant amount of power during operation, since they draw current from the mains supply 106 continuously when they are open (allowing fluid to flow). In addition, the correspondence between heating zones 122 and the thermal actuators 104 is made through a complex mapping between connections on the underfloor heating controller 102 and zones established in software on the central controller 110. However, this is often non-intuitive and can lead to installation errors with consequent improper functioning of the underfloor heating system.

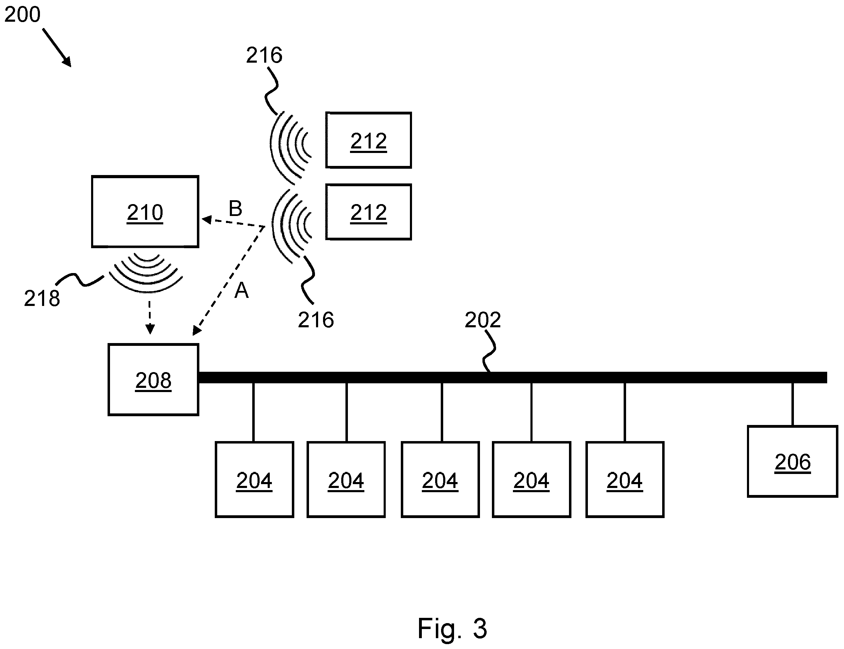

With the above in mind, Figure 3 illustrates an underfloor heating system 200 in accordance with an embodiment of the present disclosure. The underfloor heating system 200 comprises a plurality of valves 204, each of which is configured to control the flow of a heating fluid through a respective one of a plurality of heating loops 124 (not shown in Figure 3, but illustrated as an example layout of loops in Figure 2). It should be appreciated that the valves 204 according to embodiments include other components, such as for example an interface and controller, for receiving and processing data signals transmitted over the electrical bus. The heating loops 124 are associated with one or more heating zones 122 to provide heat thereto. An electrical bus 202 is connected to the valves 204 and is used to provide both power and data signals to the valves 204. Each valve 204 is configured to apply a respective valve set point in dependence on the data signals received over the electrical bus 202. It should be appreciated that the hydraulic connections and general layout in underfloor heating systems 200 according to embodiments of the present disclosure will in general be the same or similar as described with reference to Figure 2, but with the thermal actuators 104 replaced by the valves 204. In embodiments, one or more temperature sensors 212 are also provided, each of which is associated with a respective one of the heating zones 122. Each temperature sensor is configured to receive a user input corresponding to a target (user set point) temperature for the heating zone and to sense temperature in the heating zone to provide a measured temperature. The set point for each valve is calculated in dependence on the target and measured temperatures, as described in more detail below.

Unlike conventional systems, underfloor heating systems 200 according to embodiments do not require a dedicated underfloor heating controller 102. Instead, each valve 204 receives data signals over the electrical bus 202 and applies a respective valve set point in dependence on the received data. In this manner, the valves 204 of underfloor heating systems 200 according to embodiments of the disclosure are intelligent, in contrast to the thermal actuators 104 of conventional underfloor heating systems 100 which merely rely on heating of an internal wax-like material by means of an applied high voltage from a dedicated underfloor heating controller 102. As such, in embodiments, each valve 204 may comprise a processor which is operable to process data signals received over the electrical bus 202 and apply a respective valve set point in dependence thereon.

In embodiments, the valves 204 are modulating, motorized valves. Modulating in this context should be understood to mean that the valves 204 are not merely binary open/closed valves, but that the valve set point can be adjusted to several settings between fully open and fully closed. An example of such a valve is a so-called electronic thermostatic radiator valve (eTRV), specifically adapted for use in the underfloor heating system 200. Because embodiments do not use thermal actuators, in embodiments the voltage of the electrical bus 202, used to power the valves 204, can be a low voltage, such as 24 volts or less. In some embodiments, the voltage may be 12 volts or less, for example. In embodiments, one end of the electrical bus 202 is terminated at a power supply 206 which provides the voltage to power the electrical bus 202. In contrast to the conventional underfloor heating system 100, where the power supply 106 is a mains power supply, in embodiments the power supply 206 is a direct-current power supply, such as a low-cost switched-mode power supply, for example. It should be appreciated that by removing the need for separate mains voltage connections 103 to a set of thermal actuators 104, as in the conventional system 100, the installation process is simpler and can be carried out without the input of a qualified electrician. Furthermore, the wiring forming the electrical bus 202 does not need to be double insulated.

Different topologies of the electrical bus 202 are considered to fall within the scope of the present disclosure. Examples topologies include parallel electrical wires with multiple connections, one for each valve 204, or any physical arrangement that provides the same logical function as a parallel electrical bus. These include both parallel and serial connections, and can be wired in either a multi-drop (electrical parallel) or daisy chain topology, or connected by switched hubs. In embodiments, the valves 204 are wired in series on the electrical bus 202, for example in a daisy chain topology, with one end terminated at the low voltage power supply 206.

There are different manners in which the valves 204 may process data signals received over the electrical bus 202, all of which are in accordance with embodiments of the disclosure. In some embodiments, the temperature sensors 212 transmit data signals of a first type comprising the target temperature and the measured temperature for the associated heating zone 122. The data signals received by the valves 204 over the electrical bus 202 comprise these data signals of the first type. Accordingly, each valve 204 is configured such that in response to receiving a data signal of the first type corresponding to the heating zone 122 comprising the heating loop 124 controlled by that valve 204, the valve calculates and applies the valve set point in dependence on the target temperature and the measured temperature which is contained in the data signal of the first type. In this manner the valves 204 calculate their valve set points locally, based on the raw target and measured temperatures generated and transmitted by the temperature controllers 212. In some embodiments, the data signal of the first type comprising the target temperature and the measured temperature is transmitted directly from the corresponding temperature sensor 212 to the valves 204 via the electrical bus 202. In this manner, there may be no intermediate processing of the data signals of the first type, for example by a separate controller 210. The temperature sensors 212 may therefore periodically broadcast their target and measured temperature data in data signals of the first type, over the electrical bus 202, which are then received and processed by the valves 204 to configure respective valve set points.

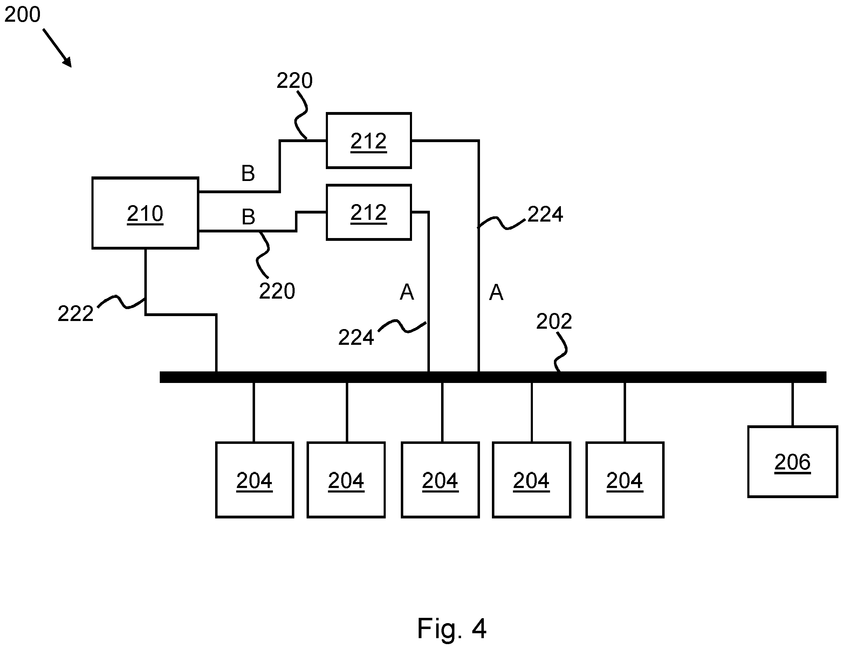

In the embodiment illustrated in Figure 3, the data signals of the first type, containing target and measured temperatures, are transmitted as wireless signals 216 from the temperature sensors 212 and are received by a wireless module 208. This is illustrated as path "A" in Figure 3. The wireless module 208 is connected to the electrical bus 202 and is configured to receive the wireless signals 216 from the temperature 212 sensors and to relay them onwards to the valves 204 over the electrical bus 202. In an alternative embodiment, illustrated in Figure 4, the temperature sensors 212 are wired to the electrical bus 202 via wired connections 224 and the data signals of the first type, containing target and measured temperatures, are transmitted from the temperature sensors 212 to the valves 204 over the electrical bus 202, without requiring a wireless module 208, illustrated as path "A" in Figure 4.

In embodiments, the data signals on the electrical bus 202 contain an identifier corresponding to one of the heating zones 122. The valves 204 effectively listen to all the data signal traffic being broadcast on the electrical bus 202, coming both from the controller 210 and the temperature sensors 212, but are only responsive to data signals having an identifier corresponding to the heating zone 122 containing the heating loop 124 which is controlled by that particular valve 204.

In embodiments, the valves 204 themselves are not always, or ever, involved in calculating their respective valve set points locally, based on target and measured temperatures received in data signals of the first type, as described above. Instead, or in addition, in various embodiments a controller 210 is also provided which performs some or all of the set point calculation function. However, it should be appreciated that the controller is optional. In this manner, the controller 210 receives, from one of the temperature sensors 212, a data signal of the first type comprising the target temperature and the measured temperature corresponding to the heating zone 122 containing the heating loop 124 controlled by a particular valve 204. This is illustrate as path "B" in Figures 3 and 4. The controller 210 calculates the valve set point for that particular valve 204 in dependence on the target and measured temperatures. The controller 210 then transmits a data signal of a second type which comprises the valve set point calculated on the controller, for example as a wireless signal 218. As such, in embodiments, the data signals received, by the valves 204, over the electrical bus comprise data signals of the second type. In contrast to the data signals of the first type described above, the data signal of the second type comprises the actual valve set point, rather than the raw target and measured temperature data. Accordingly, each of the valves 204 is configured such that in response to receiving a data signal of the second type corresponding to the heating zone 122 comprising the heating loop 124 controlled by that valve 204, the valve 204 applies the valve set point comprised in the data signal of the second type.

It should be appreciated that in underfloor heating systems 200 according to embodiments, both modes of operation may take place at the same or different times. Specifically, the data signals transmitted to the valves over the electrical bus may be both of the first and second types. For instance, the data signals may comprise a header or a flag which designates whether the data signal is of the first or second type and the valve 204 would be configured to process the data contained in the data signal accordingly. In embodiments, such as illustrated in Figure 3, the temperature sensors 212 transmit target and measured temperature data (data of the first type) to the controller 210 wirelessly, illustrated as path "B" in Figure 3. After performing the set point calculation, the controller 210 then transmits a wireless data signal 218 of the second type, comprising the valve set point, which is received by the wireless module 208. The wireless module relays the data signal of the second type over the electrical bus 202, where it is actioned upon by the corresponding valve 204. Alternatively, as illustrated in Figure 4, in some embodiments the controller 210 has wired connections 220 to the temperature sensors 212 and a wired connection 222 to the electrical bus 202, such that a wireless module 208 is not required. In such embodiments, the controller 210 and the temperature sensors 212 can transmit data signals directly onto the electrical bus 202 for reception by the valves 204. In some embodiments, data signals of the first type comprising the target and measured temperature data may be transmitted from the temperature sensors 212 to the electrical bus 202 via the controller 210, but the controller itself may not calculate the valve set point and instead may relay to the data signal of the first type onwards to the electrical bus 202.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An underfloor heating system comprising:
a plurality of valves configured to control the flow of a heating fluid through a plurality of heating loops associated with one or more heating zones; and
an electrical bus connected to the valves for providing power and data signals to the valves,
wherein each valve is configured to apply a respective valve set point in dependence on the data signals received over the electrical bus.

2. The underfloor heating system of claim 1, further comprising one or more temperature sensors, each associated with a respective one of the one or more heating zones and configured to:
receive a user input corresponding to a target temperature for the respective heating zone;
sense temperature within the respective heating zone to provide a measured temperature; and
transmit a data signal of a first type comprising the target temperature and the measured temperature.

3. The underfloor heating system of claim 2, wherein the data signals received over the electrical bus comprise the data signals of the first type.

4. The underfloor heating system of claim 3, wherein each valve is configured such that, in response to receiving a data signal of the first type corresponding to the heating zone comprising the heating loop controlled by that valve, the valve calculates and applies the valve set point in dependence on the target temperature and the measured temperature comprised in the data signal of the first type.

5. The underfloor heating system of any one of claims 2 to 4, wherein the data signals of the first type are transmitted directly from the one or more temperature sensors to the valves over the electrical bus.

6. The underfloor heating system of any one of claims 2 to 5, further comprising a controller, separate from the valves, the controller being configured to:
in response to receiving a data signal of the first type, calculate the valve set point for at least one of the valves in dependence on the target temperature and the measured temperature comprised in the data signal of the first type; and
transmit a data signal of a second type comprising the valve set point.

7. The underfloor heating system of claim 6, wherein the data signals received over the electrical bus comprise the data signals of the second type.

8. The underfloor heating system of claim 7, wherein each valve is further configured such that, in response to receiving a data signal of the second type corresponding to the heating zone comprising the heating loop controlled by that valve, the valve applies the valve set point comprised in the data signal of the second type.

9. The underfloor heating system of any one of claims 2 to 8, further comprising a wireless module connected to the electrical bus and configured to receive wireless data signals of the first and/or second types from the controller and/or from the temperature sensors and to relay them to the valves over the electrical bus.

10. The underfloor heating system of any preceding claim, wherein the data signals received over the electrical bus comprise an identifier corresponding to one of the one or more heating zones, wherein each valve is configured to be responsive only to data signals received over the electrical bus having an identifier corresponding to the heating zone comprising the heating loop controlled by that valve.

11. The underfloor heating system of any preceding claim, wherein the valves are modulating motorized valves.

12. The underfloor heating system of any preceding claim, wherein the valves are wired in series on the electrical bus.

13. The underfloor heating system of any preceding claim, further comprising a power supply operable to provide power to the valves over the electrical bus, wherein one end of the electrical bus is terminated at the power supply.

14. The underfloor heating system of any preceding claim, wherein the voltage of the electrical bus is less than or equal to 24 volts, preferably less than or equal to 12 volts.

15. The underfloor heating system of any preceding claim, further comprising a manifold connected to the plurality of heating loops, wherein the plurality of valves are grouped together at the manifold.
